Europäisches Patentamt

European Patent Office

Office européen des brevets

(19)

(11) EP 0 743 690 A1

(12) EUROPEAN PATENT APPLICATION

(43) Date of publication:
20.11.1996 Bulletin 1996/47

(51) Int. Cl.$^6$: H01M 2/16

(21) Application number: 96107686.6

(22) Date of filing: 14.05.1996

(84) Designated Contracting States:
BE DE GB

(30) Priority: 17.05.1995 JP 118410/95
30.05.1995 JP 131842/95

(71) Applicant: Mitsubishi Chemical Corporation
Chiyoda-ku, Tokyo (JP)

(72) Inventors:
• Ohara, Hidehiko,
c/o Yokohama Res. Ctr.
Yokohama-shi, Kanagawa 227 (JP)

• Watanabe, Akira,
c/o Yokohama Res. Ctr.
Yokohama-shi, Kanagawa 227 (JP)
• Aya, Tetsuya,
c/o Yokohama Res. Ctr.
Yokohama-shi, Kanagawa 227 (JP)
• Kasai, Toshikazu,
c/o Yokohama Res. Ctr.
Yokohama-shi, Kanagawa 227 (JP)

(74) Representative: TER MEER - MÜLLER -
STEINMEISTER & PARTNER
Mauerkircherstrasse 45
81679 München (DE)

(54) **Battery separator and method for its production**

(57) A battery separator made of a non-woven fabric or film of a synthetic resin, characterized in that in its ESCA measurement, when the energy at peaks attributable to C-H and C-C bonds of $C_{IS}$ electron is 285 eV, the binding energy of $F_{IS}$ electron and the binding energy of $F_{KLL}$ Auger electron have the respective peak tops within ranges of from 686 to 688 eV and from 829 to 833 eV, respectively; the elemental compositional ratio of oxygen to fluorine (O/F) in the elemental composition as measured by ESCA is at least 0.5; and O/F as measured by a fluorescent X-ray analysis is at least 0.4.

EP 0 743 690 A1

## Description

The present invention relates to a battery separator useful for alkaline secondary batteries, and a method for its production.

Heretofore, nylon non-woven fabrics have been commonly employed as separators for e.g. nickel-cadmium storage batteries, since nylon non-woven fabrics have proper strength, gas permeability and hydrophilic nature.

However, nylon can hardly be said to have adequate alkaline resistance or oxidation resistance, and it is known that nylon undergoes decomposition relatively easily at a temperature of 45°C or higher. Namely, when the battery is charged at a high temperature, nylon will be decomposed into carbon dioxide, water, ammonia, etc., by oxygen generated in the battery. Such carbon dioxide and ammonia will adversely affect the battery properties. Further, as the decomposition progresses, the insulating ability of the separator deteriorates, and eventually internal short circuiting will result in the battery.

To solve such a problem, an attempt has been made to change the material for the separator to a polyolefin resin. Particularly, a polypropylene non-woven fabric has been used primarily for a nickel-hydrogen secondary battery or a battery to be used at a high temperature.

The polyolefin non-woven fabric has excellent chemical resistance but is poor in the hydrophilic nature, whereby it has been difficult to permeate a liquid having a high surface tension, particularly a water-soluble electrolyte or a non-aqueous electrolyte such as propylene carbonate which is used in a lithium battery, and the electrolyte-maintaining ability has been poor. Accordingly, a battery employing such a non-woven fabric was inferior to a battery employing a nylon non-woven fabric in the overall battery properties including the battery capacity and internal resistance.

As a method for solving this problem and improving the electrolyte-maintaining ability, a method of coating a surfactant may, for example, be mentioned (e.g. Japanese Unexamined Patent Publication No. 255107/1985). However, in such a case, flow out of the surfactant will be problematic. Further, once dried, the separator will no longer show the hydrophilic nature. Therefore, such a method does not give an essential solution to the problem.

Further, a method of modifying the surface by plasma treatment may be mentioned. However, by such a method, uniform treatment of a large sized material is difficult, and the costs for the apparatus are high. Accordingly, the method is not suitable as a common simple treating method.

Furthermore, a polyolefin non-woven fabric having a hydrophilic nature imparted by sulfonation, has been used, but such a fabric has been inadequate in alkali resistance. Further, it is also known to subject a polyolefin non-woven fabric to surface treatment with a gas mixture of fluorine and oxygen to impart a hydrophilic nature (Japanese Examined Patent Publication No. 5601/1984), or to use such a treated non-woven fabric as a separator for a battery (Japanese Examined Patent Publications No. 7548/1992 and No. 46056/1993). However, such methods have been unsatisfactory with respect to the hydrophilic nature.

The present inventors have conducted extensive studies to solve the above problems and as a result, have found that a battery separator having fluorine atoms with a certain specific binding energy and having a certain specific surface composition, is excellent in the chemical resistance, solvent resistance and weather resistance and has high levels of properties such as the hydrophilic nature, dyability and printability. The present invention has been accomplished on the basis of these discoveries.

That is, the present invention provides a battery separator made of a non-woven fabric or film of a synthetic resin, characterized in that in its ESCA measurement, when the energy at peaks attributable to C-H and C-C bonds of $C_{IS}$ electron is 285 eV, the binding energy of $F_{IS}$ electron and the binding energy of $F_{KLL}$ Auger electron have the respective peak tops within ranges of from 686 to 688 eV and from 829 to 833 eV, respectively; the elemental compositional ratio of oxygen to fluorine (O/F) in the elemental composition as measured by ESCA is at least 0.5; and O/F as measured by a fluorescent X-ray analysis is at least 0.4.

Now, the present invention will be described in detail.

The battery separator of the present invention is characterized in that as measured by ESCA (electron spectroscopy for chemical analysis), when the energy at peaks attributable to C-H and C-C bonds of $C_{IS}$ electron is 285 eV, the binding energy of $F_{IS}$ electron and the binding energy of $F_{KLL}$ Auger electron have the respective peak tops within the ranges of from 686 to 688 eV and from 829 to 833 eV, respectively. The present invention has a feature that the binding energies of surface $F_{IS}$ electron and $F_{KLL}$ Auger electron as measured by ESCA are remarkably low as compared with the surface treated by conventional fluorine treatment to impart water repellency (the binding energy of $F_{IS}$ electron being about 690 eV, and the binding energy of $F_{KLL}$ Auger electron being about 836 eV).

Here, the binding energy is the minimum energy required to drive out an interior shell electron which is bonded to an atomic nucleus. The binding energy of such an interior shell electron has a value specific to each element, but it varies within a range of a few eV, if the chemical bond state of the atom differs. For example, the one having a $F_{IS}$ binding energy of 689 eV and a $F_{KLL}$ binding energy of 835 eV indicates formation of a $-CF_2-$ or $-CF_3$ bond on the surface and exhibits water repellency as observed with Teflon (tradename).

In a case where a plurality of peaks of $C_{IS}$ electron are observed due to bonding to the non-woven fabric or film surface, the energy value of the peak having the smallest binding energy is set to be 285 eV.

2

As mentioned above, the binding energies measured by ESCA reflect the chemical bond states of atoms very sensitively. For example, they are not simply determined by the state of the atmosphere for treatment with a gas containing fluorine and oxygen, and they reflect various factors such as the moisture in the material to be treated and substances attached thereto, although the detailed mechanism is not clearly understood. By adjusting such binding energies within the specified ranges, it is possible to obtain a battery separator having excellent physical properties. As an example of a case wherein the binding energy measured by ESCA changes sensitively by bonding of e.g. fluorine, "Manual for Instrumental Analysis 3" published by Kagaku Dojin discloses that when F having a large electrical negativity is introduced to polyethylene ($-CH_2-CH_2)_n$, the position of the peak in the spectrum of $C_{IS}$ electron will shift to a higher energy side. Namely, ($-CH_2-CH_2)_n$ has only a single peak at 283.1 eV. Whereas, if one H is replaced by F, the spectrum of $C_{IS}$ electron of -CHF- i.e. C having F bonded thereto, will shift to 285.6 eV, and the spectrum of $C_{IS}$ electron of the adjacent $-CH_2-$ will also shift slightly to 283.4 eV. This tendency becomes more distinct if two F are introduced. Namely, the spectrum of $C_{IS}$ electron of $-CF_2-$ will shift to 289.3 eV, and that of the $-CH_2-$ group will shift to 283.7 eV. If all H are substituted by F, the two C will be equivalent, whereby the $C_{IS}$ electron will have only one peak again.

The battery separator of the present invention is further characterized in that the elemental compositional ratio of oxygen to fluorine (O/F) in the elemental composition as measured by ESCA is at least 0.5, preferably from 0.5 to 10, more preferably from 0.5 to 3, most preferably from 0.5 to 1.5. If O/F by ESCA is less than 0.5, the amount of oxygen present on the outermost surface is too small to obtain adequate hydrophilic nature.

Further, the elemental compositional ratio of oxygen to carbon (O/C) as measured by ESCA is preferably from 0.01 to 0.5, more preferably from 0.05 to 0.5. If O/C is less than 0.01, it may happen that no adequate hydrophilic nature is obtainable, and if it exceeds 0.5, deterioration in strength is likely to occur.

Here, the elemental composition as measured by ESCA means the one measured by using ESCA-5500 MC manufactured by PERKIN ELMER PHI under such conditions as 14 kV and 150 W (using a monochrometer, take out angle: 65°) employing Al as the radiation source. Further, in the battery separator of the present invention, the elemental compositional ratio of oxygen to fluorine (O/F) in the elemental composition as measured by a fluorescent X-ray analysis (hereinafter referred to as "XRF") is usually at least 0.4, preferably from 0.4 to 10, more preferably from 0.4 to 3, most preferably from 0.4 to 2. If O/F by XRF is less than 0.4, the amount of oxygen present in the surface layer is too small to obtain adequate hydrophilic nature.

Here, the elemental composition as measured by XRF means the one measured by using a fluorescent X-ray analyzer System 3370e, manufactured by Rigaku Denki K.K. under such conditions as 40 kV and 70 mA employing a Rh bulb as a primary X-ray source and using analyzing crystal RX40 manufactured by Rigaku Denki K.K.

Further, the battery separator of the present invention is preferably such that the amount of attached fluorine to be removed by dipping in water is usually at most 0.005 wt%, preferably at most 0.002 wt%. This means that the amount of fluorine eluting when the battery separator is dipped in an electrolyte, is extremely small. When a battery separator is treated with e.g. a gas containing fluorine and oxygen to impart hydrophilic nature to the surface, fluorine will be attached or adsorbed usually in an amount of up to about 0.05 wt%. However, fluorine thus attached or adsorbed will be involved in the battery reaction on the electrode surface and thus leads to self discharge, whereby cycle properties will be deteriorated. Further, such fluorine may be inhaled by a worker who assembles the batteries and thus is likely to cause a health problem.

Here, the amount of attached fluorine to be removed by dipping in water is represented by a value obtained in such a manner that 0.2 g of a test sample is dipped in 10 ml of pure water and subjected to ultrasonic wave extraction at room temperature (25°C) for one hour, whereupon the amount of fluorine in the extract solution is quantitatively analyzed immediately by means of ion chromatography.

As the method for removing fluorine, a method of washing with water at a temperature of from 0 to 100°C for from one second to one hour, or a method of blowing nitrogen or air thereto, may, for example, be mentioned.

The battery separator of the present invention is usually made of a synthetic resin, preferably a polyolefin resin such as polyethylene, polypropylene, polyvinyl acetate or polyvinyl alcohol, or a resin composition comprising such a polyolefin resin and an ethylene-vinyl acetate copolymer or a saponified product of an ethylene-vinyl acetate copolymer. Among them, a polyolefin resin such as polyethylene or polypropylene is particularly preferred from the viewpoint of the chemical resistance, solvent resistance, weather resistance, etc.

As the raw material cloth for the battery separator, a non-woven fabric or film may, for example, be mentioned. Particularly preferred is a non-woven fabric.

The non-woven fabric to be used in the present invention can be produced by means of various conventional techniques. For example, a wet system production method wherein fibers are uniformly suspended in water and then sheeted by means of e.g. a screen, an air laid method wherein fibers are scattered in air and then collected on a screen to form a card, or a spun bond method or a melt blow method wherein a web is formed directly from a spinning machine, may, for example, be mentioned. Further, at the time of preparing the non-woven fabric, a surfactant to improve the dispersibility of fibers, or an additive such as polyvinyl alcohol to improve entanglement of fibers, may be used. Such a non-woven fabric may be of a single layer or a laminate in which two or more different non-woven fabrics are laminated.

The fibers constituting the non-woven fabric are preferably those having a fineness of from 0.1 to 6 denier. The non-woven fabric is preferably the one having a weight of from 20 to 100 g/m$^2$ and a thickness of from 10 to 1,000 $\mu$m, preferably from 5 to 300 $\mu$m, more preferably from 100 to 300 $\mu$m, most preferably from 100 to 200 $\mu$m. If it is too thick, there will be a problem in increasing the capacity of the battery. On the other hand, if it is too thin, the insulating ability and the strength will be low. Further, it is possible to employ a non-woven fabric made of fibers having fine pores, a non-woven fabric comprising two or more types of fibers differing in fineness, a non-woven fabric having a layered structure comprising a plurality of layers, or a product having a film laminated on a non-woven fabric.

A preferred non-woven fabric may, for example, be a non-woven fabric containing fibers having a core-sheath structure wherein the core component is polypropylene and the sheath component is polyethylene, or a non-woven fabric comprising fibers having a core-sheath structure wherein the core component is polypropylene and the sheath component is polyethylene, and other polyolefin fibers. By using polypropylene as the core component, it is possible to maintain the structure of the separator, when the battery is exposed to a high temperature due to short circuiting, overcharging, etc. Further, it is thereby possible to provide adequate strength required for assembling into a battery. Whereas, by using polyethylene as the sheath component, it is possible to overcome a problem that hydrophilic nature is hardly attainable even by the treatment with the gas mixture of fluorine and oxygen with the conventional polypropylene fibers, and it is further possible to improve the strength due to heat fusion of the polyethylene itself during the preparation of non-woven fabric. Namely, it is preferred to use fibers having a structure in which polypropylene excellent in the heat resistance is used as the core and polyethylene which can readily be made hydrophilic, is used as the sheath.

In the present invention, the core-sheath structure is a general term including a core-sheath structure and a parallel structure, when the core-sheath structure is meant to represent a structure wherein the core component and the sheath component are concentrically disposed in the cross section of each fiber, and the parallel structure is meant for a structure wherein the core component polypropylene is eccentrically disposed, which is called also as a side-by-side structure. The proportions of the core and the sheath may be optional, but fibers having a cross sectional area ratio of the core to the sheath of from 10:1 to 1:10 is preferably employed. Two or more different types of fibers having such core-sheath structures may be used in combination.

The fineness of fibers having the core-sheath structure is usually from 0.2 to 6 denier, preferably from 0.5 to 4 denier. If the fineness is less than 0.2 denier, the dispersibility of fibers tends to be poor, and if it exceeds 6 denier, large pores are likely to be formed among fibers, which in turn is likely to lead to short circuiting when such a non-woven fabric is sandwiched as a battery separator between electrodes.

Said other polyolefin fibers may usually be polyolefin fibers such as polyethylene or polypropylene fibers. For example, when high hydrophilic nature is desired, it is preferred to employ polyethylene, and when heat resistance is desired, it is preferred to employ polypropylene. The polyolefin fibers may preferably be fibers of a polyolefin such as polyethylene or polypropylene, or a blend product thereof, or fibers made of a single component of a copolymer of such polyolefins. However, it is also possible to use, as said polyolefin fibers, fibers having a core-sheath structure other than those described above. The fineness of the polyolefin fibers is not particularly limited, and they may not necessarily be in fiber form in a strict sense, i.e. they may be of linear or branched shapes, or they may be cotton-like just like asbestos.

The proportions of the fibers having a core-sheath structure and other polyolefin fibers are optional, but the fibers having a core-sheath structure are usually from 30 to 100 wt%, preferably from 40 to 90 wt%. If the fibers having a core-sheath structure are less than 30 wt%, it tends to be difficult to obtain a non-woven fabric having adequate strength when said other polyolefin fibers are polyethylene fibers, since the strength of polyethylene fibers is low. Further, when said polyolefin fibers are polypropylene fibers, it tends to be difficult to bond fibers to one another by a thermal bonding method, since polypropylene will not fuse at the melting point of polyethylene, whereby it tends to be difficult to obtain required strength. Further, polypropylene is inferior to polyethylene in the processability by hydrophilic treatment with a gas mixture of fluorine and oxygen, whereby it tends to be difficult to attain adequate hydrophilic nature as a non-woven fabric.

The air permeability of the non-woven fabric is usually from 5 to 150 cm$^3$/cm$^2$/sec, preferably from 10 to 150 cm$^3$/cm$^2$/sec, more preferably from 30 to 100 cm$^3$/cm$^2$/sec, as measured by Urazir method. If the air permeability is less than 5 cm$^3$/cm$^2$/sec, the ion conductivity tends to be low, and if its exceeds 150 cm$^3$/cm$^2$/sec, the thickness is required to be increased to obtain required strength, and the strength tends to be inadequate within a preferred range of the thickness.

The tensile break strength is usually from 3 to 20 kgf/2cm, preferably from 4 to 20 kgf/2cm. If the tensile break strength is less than 3 kgf/2cm, the separator is likely to rapture during assembling a battery.

The metsuke of the non-woven fabric is preferably from 30 to 100 g/m$^2$ from the viewpoint of the balance of the above physical properties.

Further, the non-woven fabric to be used in the present invention may contain fibers other than the fibers having a core-sheath structure and the polyolefin fibers.

When the raw material cloth is a film, a porous film is preferably employed, which has a film thickness of from 1 to 350 $\mu$m, an average pore diameter of from 0.001 to 0.1 $\mu$m, a bubbling point of from 1 to 10 kg/cm$^2$ as measured in accordance with JIS K3832, and an air permeability of from 20 to 2,000 sec/100 cc as measured by JIS P8117.

The battery separator of the present invention can be prepared by treating a raw material cloth such as a non-woven fabric or film with a gas mixture containing fluorine and oxygen (hereinafter referred to simply as "gas mixture"). The gas mixture may contain an inert gas such as nitrogen or helium in addition to fluorine and oxygen.

A method of contacting the raw material cloth for the battery separator and the gas mixture is not particularly limited, but a batch treating method or a continuous treating method may be mentioned. As the batch treating method, a method may be mentioned wherein the raw material cloth is put in a sealed reactor, and the gas in the reactor is substituted by a gas containing fluorine and oxygen to contact it with the raw material cloth. Whereas, as the continuous treating method, a method may be mentioned in which the separator is passed through a gas mixture atmosphere containing fluorine and oxygen. In this case, the gas containing fluorine and oxygen is introduced in a sealed container, and an inlet and an outlet are provided so that the gas will not leak out of the container, whereby the raw material cloth is continuously treated, or the contact treatment may be carried out in an apparatus which may not necessarily be a sealed container, but which is designed to prevent leaking of fluorine by a method such as air curtain method or by reducing the fluorine partial pressure. Further, to increase the contact efficiency with the gas mixture, the raw material cloths may be held not to contact one another, or unwinding of a rolled sheet and winding it up into a rolled sheet may be carried out in the container. The fluorine partial pressure in the gas mixture is usually from 0.01 to 400 mmHg, preferably from 0.1 to 100 mmHg, more preferably from 0.1 to 50 mmHg. If the fluorine partial pressure is less than 0.01 mmHg, the reaction of fluorine with the raw material cloth for the battery separator will be inadequate, whereby the effect of the surface treatment tends to be inadequate, or uneven treatment is likely to result. On the other hand, if it exceeds 400 mmHg, the reaction tends to be excessive, whereby the effect for hydrophilicity is likely to be small, or the mechanical strength of the battery separator is likely to be impaired.

In the gas mixture, presence of oxygen is required. The oxygen content is usually at least 15 vol%, preferably from 30 to 99 wt%. The gas mixture may contain as a diluting gas an inert gas such as nitrogen, carbon dioxide or argon in addition to fluorine and oxygen. The content of such a diluting gas is usually at most 85 vol%, preferably from 1 to 70 vol%, of the gas mixture.

The total pressure for such a treatment may be atmospheric pressure, negative pressure or positive pressure. The total pressure may be at any level so long as the partial pressures or vol% of fluorine and oxygen in the gas mixture satisfy the described conditions.

The treating temperature is usually from -70 to 140°C, preferably from 0 to 90°C, more preferably from 0 to 50°C. If the temperature is lower than -70°C, the reactivity of fluorine decreases extremely, and if it exceeds 140°C, the polyethylene component of the non-woven fabric will fuse. Further, if the temperature is lower than 0°C, the reactivity of fluorine is low, whereby it tends to be difficult to conduct the treatment effectively. On the other hand, if it exceeds 90°C, the fluorination reaction tends to proceed preferentially as compared with oxidation, whereby it tends to be difficult to obtain the desired hydrophilic nature.

The treating time may be selected within a wide range and is selected usually within a range of from 1 second to 10 days, preferably from 1 second to 3 hours, more preferably from 1 second to 30 minutes. If the treating time is less than 1 second, the reaction tends to be inadequate, whereby no adequate effects of the present invention tend to be obtained.

Fluorine to be used in the present invention can be obtained usually by electrolysis of hydrogen fluoride. The fluorine obtained by such electrolysis may be used directly for the fluorination treatment. Otherwise, it may be used as supplied from a bomb in which fluorine or a gas mixture of fluorine with other gas such as nitrogen, is filled.

For such treatment, the moisture content of the raw material cloth for the battery separator to be treated is usually at most 500 ppm, preferably at most 200 ppm. If the moisture content exceeds 500 ppm, fluorine will be wasted by the reaction with water, whereby fluorine effective for the desired reaction will decrease, and consequently the treatment effects tend to be inadequate, a battery separator having a desired O/F ratio tends to be hardly obtained, it tends to take a long time for the reaction, or no adequate hydrophilic nature required for the battery separator tends to be obtained.

After completion of the reaction of the gas mixture and the non-woven fabric, a waste gas containing the unreacted gas mixture and small amounts of by-products such as hydrogen fluoride, will be removed. Conventional techniques can be used for detoxication of the waste gas. For example, the non-reacted fluorine may be fixed as aluminum fluoride by passing it through a tube packed with alumina particles, or may be treated by passing the gas through an aqueous alkaline solution. Further, hydrogen fluoride which forms in a very small amount, may be adsorbed by sodium fluoride particles.

Fluorine has a small atomic radius. Accordingly, it remains on the battery separator surface in a state close to an adsorbed state and will be detached as the time passes. To remove such adsorbed fluorine, it is preferred to wash the battery separator with water, an aqueous alkaline solution or the like, after the reaction with the gas mixture. Hard water components such as Ca, Mg, etc., in water or in an aqueous alkaline solution tend to promote detachment of fluorine bonded to the battery separator. Accordingly, it is advisable to control the hard water component such as Ca, Mg, etc., in water or an aqueous alkaline solution to be no higher than a certain concentration. Preferably, deionized water is employed.

In general, separators for alkaline secondary batteries are required to have an initial lyophilic property higher than the lyophilic property or liquid-maintaining property of the separators already assembled in the batteries, in order to shorten the time for assembling the batteries. Accordingly, in the present invention, it is preferred to coat a nonionic surfactant after the treatment with the gas mixture, whereby the initial lyophilic property can remarkably be improved.

The nonionic surfactant may, for example, be a polyhydric alcohol type nonionic surfactant (ester type) having as hydrophilic groups a polyhydric alcohol such as glycerol, sorbitol or saccharide, or a polyethylene glycol type (ether type) nonionic surfactant having ethylene oxide functioning as a hydrophilic group added to a hydrophobic starting material. Further, an ether ester type nonionic type surfactant having ethylene oxide added to a polyhydric alcohol type surfactant, may be employed. Particularly preferred is an alkyl phenol type polyethylene glycol type nonionic surfactant in view of the cost and the balance of the surface active properties.

Conventional methods may be used for coating the surfactant. For example, a method of coating by dipping the non-woven fabric treated by the gas mixture in a surfactant solution having a surfactant dissolved in a solvent such as water, or a method of spray coating a surfactant solution, may be mentioned. The concentration of the surfactant solution may be selected within a wide range, but it is usually within a range of from 0.01 to 5 wt%, preferably from 0.05 to 1 wt%. If the concentration of the surfactant solution is les than 0.01 wt%, it tends to be difficult to obtain the desired lyophilic property, and if it exceeds 5 wt%, elution of the surfactant will be problematic.

As an index for alkali resistance, the weight reduction after dipping the separator in a 30 wt% potassium hydroxide aqueous solution for one hour at 100°C, is usually at most 1.4 wt%, preferably at most 1 wt%. If the weight reduction after dipping in the 30 wt% potassium hydroxide aqueous solution for one hour at 100°C, exceeds 1.4 wt%, the alkali resistance tends to be inadequate, and such will not acceptable especially for a battery employing an alkaline solvent as an electrolyte, such as a nickel-hydrogen battery or a nickel-zinc battery.

Now, the present invention will be described in further detail with reference to Examples. However, it should be understood that the present invention is by no means restricted to such specific Examples.

In the following Examples, the respective measurements were carried out by the following methods.

(1) Liquid absorption height of electrolyte

A sample was cut into a strip shape of 15 mm in width and 250 mm in length, and an end of the cut sample was immersed in an electrolyte, and the liquid absorption height after 30 minutes was measured.

(2) ESCA measurement

The binding energies of $F_{IS}$ and $F_{KLL}$ as measured by ESCA are those measured by using ESCA-5500MC, manufactured by PERKIN ELMER PHI under such conditions as 14 kV, 150 W (using a monochrometer), a take out angle of 65° and an analytical area of 0.8 mm × 3.5 mm using K$\alpha$ ray of Al as the radiation source. In the determination of the binding energy of each spectrum, the energy of the peak attributable to C-H and C-C bonds of $C_{IS}$ electron was set to be 285 eV.

The elemental compositional ratio at the surface was calculated from the peak areas and the sensitivity coefficients of the respective elements.

(3) XRF measurement

XRF is the one measured by using a fluorescent X-ray analyzer System 3380E, manufactured by Rigaku Denki K.K. under such conditions as 40 kV and 70mA using a Rh bulb as a primary X-ray source and using analyzing crystal RX 40 manufactured by Rigaku Denki K.K. The surface elemental compositional ratio R (F/O) was calculated by the formula (I) from the net intensities I(O) and I(F) obtained by subtracting the blank intensities of O-K$\alpha$ and F-K$\alpha$ rays of the non-treated raw material cloth on the assumption that the sensitivities of F-K$\alpha$ and O-K$\alpha$ rays are constant from the surface to the fluorinated layer, using the atomic ratio f(O/F)=15.999/18.998=0.842 and the theoretical sensitivity ratio Ct(O/F)=0.263 obtained by the soft ware attached to the X-ray analyzer. The value O/F is an inverse number of the value R(F/O).

$$R(F/O) = [f(O/F)Ct(O/F)][I(F)/I(O)] \qquad (1)$$
$$= 0.221 \times [I(F)/I(O)]$$

(4) Method for measuring the amount of attached fluorine

About 0.2 g of a sample was dipped in 10 ml of pure water and subjected to ultrasonic extraction for one hour. Then, the amount of fluorine in the extract solution was quantitatively analyzed by means of an ion chromatograph. The measurement was carried out by using DX-100 manufactured by DIONX Company as the ion chromatograph, ICS-A35 as

EP 0 743 690 A1

the column, 4.4 mM-$Na_2CO_3$/1.2 mM-$NaHCO_3$ as the eluting solution, and 25 mM-$H_2SO_4$ as the regenerating solution, at a flow rate of 1.5 cm/min.

(5) Tensile break strength

A sample having a width of 20 mm was pulled by means of an Instron universal tester with a chuck distance of 50 mm at a tensile speed of 200 mm/min, whereby the stress at breakage was measured.

(6) Infiltration speed of electrolyte

10 μl of an electrolyte (a 30 wt% potassium hydroxide aqueous solution) was dropped on a non-woven fabric laid horizontally at a temperature of 24°C under a humidity of 65%, whereby the time until the electrolyte infiltrated completely into the non-woven fabric, was recorded.

(7) Liquid maintaining rate for electrolyte

A sample was dipped in a 30 wt% potassium hydroxide aqueous solution for 30 minutes, and then hanged in air at 24°C under a humidity of 65% for 10 minutes, whereby the weight change percentage was measured.

(8) Air permeability

In accordance with JIS L1096-1979, the air permeability was measured by an air permeability tester, manufactured by Kabushiki Kaisha Toyo Seiki Seisakusho.

(9) Alkali resistance test

0.2 g of a sample was dipped in a 30 wt% potassium hydroxide aqueous solution for one hour at 100°C, whereupon the weight reduction (wt%) was measured.

EXAMPLE 1

Into a reactor resistant to fluorine, a non-woven fabric having a weight of 58 g/m$^2$ and and thickness of 249 μm comprising 50 wt% of polypropylene (PP) fibers of 1.5 denier and 50 wt% of fibers of 0.9 denier having a core-sheath structure wherein the sheath component was polyethylene (PE) and the core component was polypropylene (PP), was introduced, and after evacuation, a gas mixture having a partial pressure ratio of fluorine ($F_2$)/oxygen ($O_2$)/nitrogen ($N_2$) =10/660/90 mmHg was introduced to a pressure of 760 mmHg. After leaving the system to stand still at room temperature for 5 minutes, the gas mixture was evacuated, and nitrogen gas was introduced to a pressure of 760 mmHg. Then, the sample was taken out and dipped in a warm bath of 50°C for 5 minutes to obtain a battery separator made of a nonwoven fabric.

The ESCA measurement was carried out, whereby when the energy of the peak attributable to C-H and C-C bonds of $C_{IS}$ electron was set to be 285 eV, the binding energy of the $F_{IS}$ electron spectrum had a peak top at 687 eV, and the binding energy of the $F_{KLL}$ Auger electron spectrum had a peak top at 832 eV. Further, the surface elemental compositional ratio of O/F was determined from the peak area ratio of $F_{IS}$ and $O_{IS}$ obtained by the ESCA measurement and found to be 1.4.

Further, O/F was determined from the XRF measurement and found to be 1.0. Further, the amount of attached fluorine was measured by the ion chromatography and found to be 0.002 wt%.

The liquid absorption height of this battery separator was 140 mm when it was held for 30 minutes in alkali (a 30% KOH aqueous solution).

EXAMPLE 2

With respect to the same non-woven fabric as used in Example 1, the same treatment as in Example 1 was carried out except that a gas mixture having a partial pressure ratio of fluorine ($F_2$)/oxygen ($O_2$)/nitrogen ($N_2$) = 300/200/260 mmHg was used (no warm water washing treatment was carried out). The binding energies were measured by the ESCA measurement, whereby when the energy of the peak attributable to C-H and C-C bonds of $C_{IS}$ electron was set to be 285 eV, the $F_{IS}$ electron spectrum had a peak top at 687 eV, and the $F_{KLL}$ Auger electron spectrum had a peak top at about 833 eV. Further, O/F by the ESCA measurement was 1.2, and O/F by the XRF measurement was 0.8. Further, the amount of attached fluorine was measured by the ion chromatography, whereby it was found to be 0.008 wt%.

7

The liquid absorption height of this separator after maintaining it in alkali (a 30% KOH aqueous solution) for 30 minutes, was measured and found to be 80 mm.

EXAMPLE 3

Into a reactor resistant to fluorine, a non-woven fabric having a weight of 53 g/m$^2$ and a thickness of 153 $\mu$m comprising 30 wt% of a filler of amorphous polyethylene (PE) containing about 1% of polyvinyl alcohol (PVA) and 70 wt% of fibers of 1.5 denier having a core-sheath structure wherein the sheath component was PE and the core component was PP, was introduced, and after evacuation, continuous treatment was carried out with a gas mixture having a partial pressure ratio of fluorine ($F_2$)/oxygen ($O_2$)/nitrogen ($N_2$) = 20/560/180 mmHg for a retention time of about 15 seconds. The obtained non-woven fabric was further dipped in a warm bath of 50°C for 5 minutes. The binding energies of the $F_{IS}$ electron and $F_{KLL}$ Auger electron spectra were measured by the ESCA measurement, whereby when the energy of the peak attributable to C-H and C-C bonds of $C_{IS}$ electron was set to be 285 eV, the $F_{IS}$ electron and $F_{KLL}$ Auger electron spectra had the respective peak tops at about 687 eV and 832 eV, respectively. Further, O/F by the ESCA measurement was 0.8, and O/F by the XRF measurement was 0.5. The amount of attached fluorine was measured and found to be 0.003 wt%.

The liquid absorption height of this battery separator was measured after maintaining it for 30 minutes in alkali (a 30% KOH aqueous solution) and found to be 100 mm.

COMPARATIVE EXAMPLE 1

With respect to the same non-woven fabric as used in Example 1, treatment was carried out in the same manner as in Example except that a gas mixture having a partial pressure ratio of fluorine ($F_2$)/oxygen ($O_2$)/nitrogen ($N_2$) = 19/76/665 mmHg was used, and warm water washing treatment was carried out in the same manner as in Example 1. The binding energies were measured by ESCA measurement, whereby when the energy of th peak attributable to C-H and C-C bonds of $C_{IS}$ electron was set to be 285 eV, the binding energies of the $F_{IS}$ electron and $F_{KLL}$ Auger electron spectra had the respective peak tops at about 687 eV and 833 eV, respectively. Further, O/F by the ESCA measurement was 0.3, and O/F by the XRF measurement was 0.4. The amount of attached fluorine was measured and found to be 0.005 wt%.

The liquid absorption height of this separator was measured after maintaining it for 30 minutes in alkali (a 30% KOH aqueous solution) and found to be 40 mm.

COMPARATIVE EXAMPLE 2

With respect to a battery separator made of a multilayer film comprising a non-woven fabric of PP and PE (PP/PE = 1/3) and polytetrafluoroethylene (PTFE), the surface of the polytetrafluoroethylene was subjected to the ESCA measurements, whereby when the energy of the peak attributable to C-H and C-C bonds of $C_{IS}$ electron was set to be 285 eV, the binding energies of the $F_{IS}$ electron and $F_{KLL}$ Auger electron spectra had the respective peak tops at about 690 eV and 836 eV, respectively. Further, O/F by the ESCA measurement was 0, and O/F by the XRF measurement was also 0. Further, the amount of attached fluorine was measured by the ion chromatography and found to be 0 wt%. The alkali liquid absorption speed of this separator was measured and found to be 0 mm.

The results of Examples 1 to 3 and Comparative Examples 1 and 2 are summarized in Table 1.

REFERENCE EXAMPLE 1

With respect to a non-woven fabric (metsuke: 53 g/m$^2$, thickness: 153 $\mu$m, air permeability: 40 cm$^3$/cm$^2$/sec) comprising 70% of fibers of 1.5 denier, wherein the core component was polypropylene and the sheath component was polyethylene with the cross sectional ratio of the core to the sheath being 1:1.25 and 30% of cotton-like polyethylene fibers having a melting point of 132°C and prepared by a wet system method, the infiltration speed of electrolyte, the liquid-maintaining ratio and the tensile break strength were measured, and the ESCA measurement and the XRF measurement were carried out. The results are shown in Table 2.

EXAMPLE 4

The non-woven fabric of Reference Example 1 was introduced into a container resistant to fluorine, and the inside of the container was evacuated. Then, a gas mixture comprising 2.6 vol% of fluorine, 73.7 vol% of oxygen and 23.7 vol% of nitrogen, was introduced into the container, and the elongated non-woven fabric was continuously treated. After completion of the reaction, the gas was evacuated and substituted by nitrogen, whereupon the sample was taken out and continuously washed with deionized water, followed by drying;

The obtained non-woven fabrics were subjected to measurement of the infiltration speed of electrolyte, the liquid maintaining rate, the tensile break strength, the ESCA measurement and the XRF measurement. The results are shown in Table 2. As the fluorine and oxygen were introduced, the infiltration speed of electrolyte and the liquid maintaining rate were found to be improved over Comparative Example 1. No change was observed in the metsuke, the thickness and the air permeability of the obtained non-woven fabric as compared with those before treatment.

EXAMPLE 5

A 0.5 wt% polyoxyethylenenonylphenylether aqueous solution (surfactant: HLB 15.5) was coated on the non-woven fabric obtained in Example 1 and dried.

The obtained non-woven fabric was subjected to the measurement of the infiltration speed of electrolyte, the liquid absorption height, the liquid maintaining rate and the tensile break strength, the ESCA measurement and the XRF measurement. The results are shown in Table 2. As compared with the following Comparative Example 3 in which no fluorine or oxygen was introduced, the infiltration speed of electrolyte and the liquid absorption height are improved.

COMPARATIVE EXAMPLE 3

On the non-woven fabric of Reference Example 1, the same surfactant solution as used in Example 5 was coated in the same manner as in Example 5. The obtained non-woven fabric was subjected to the measurement of the infiltration speed of electrolyte, the liquid maintaining rate, the tensile break strength, the ESCA measurement and the XRF measurement. The results are shown in Table 2.

REFERENCE EXAMPLE 2

With respect to a non-woven fabric (metsuke: 59 g/m$^2$, thickness: 250 $\mu$m, air permeability: 90 cm$^3$/cm$^2$/sec) comprising 72% of fibers of 1.5 denier wherein the core component was polypropylene and the sheath component was polyethylene with the ratio of the core to the sheath being 1:1.25, 8% of fibers of 3 denier wherein the eccentric core component was polypropylene and the main component of the sheath was polyethylene (side-by-side type), and 20% of cotton-like polyethylene fibers having a melting point of 125°C and prepared by a wet system method, the infiltration speed of electrolyte, the liquid maintaining rate and the tensile break strength were measured, and the ESCA measurement and the XRF measurement were carried out. The results are shown in Table 2.

EXAMPLE 6

The non-woven fabric of Reference Example 2 was treated in the same manner as in Example 4.

With respect to the obtained non-woven fabric, the infiltration speed of electrolyte, the liquid maintaining rate and the tensile break strength were measured, and the ESCA measurement and the XRF measurement were carried out. The results are shown in Table 2.

REFERENCE EXAMPLE 3

With respect to a non-woven fabric (metsuke: 60 m$^2$, thickness: 160 $\mu$m, air permeability: 28 cm$^3$/cm$^2$/sec) comprising 40% of fibers of 0.9 denier wherein the core component was polypropylene and the sheath component was polyethylene with the ratio of the core to the sheath being 1:1, 40% of polypropylene fibers of 1.5 denier, and 20% of cotton-like polyethylene fibers, the infiltration speed of electrolyte, the liquid maintaining rate and the tensile break strength were measured, and the ESCA measurement and the XRF measurement were carried out. The results are shown in Table 2.

EXAMPLE 7

The non-woven fabric of Reference Example 3 was treated in the same manner as in Example 4.

With respect to the obtained non-woven fabric, the liquid absorption height of electrolyte, the liquid maintaining rate and the tensile break strength were measured, and the ESCA measurement and the XRF measurement were carried out. The results are shown in Table 2.

REFERENCE EXAMPLE 4

With respect to a non-woven fabric (metsuke: 58 g/m$^2$, thickness: 249 $\mu$m, air permeability: 50 cm$^3$/cm$^2$/sec) comprising 50% of fibers of 0.9 denier, wherein the core component was polypropylene and the sheath component was polyethylene with the ratio of the core to the sheath being 1:1, and 50% of polypropylene fibers of 1.5 denier, the infiltration speed of electrolyte, the liquid maintaining rate and the tensile break strength were measured, and the ESCA measurement and the XRF measurement were carried out. The results are shown in Table 2.

EXAMPLE 8

The non-woven fabric of Reference Example 4 was treated in the same manner as in Example 4.

With respect to the obtained non-woven fabric, the liquid absorption height of electrolyte, the liquid maintaining rate and the tensile break strength were measured, and the ESCA measurement and the XRF measurement were carried out. The results are shown in Table 2.

COMPARATIVE EXAMPLE 4

A non-woven fabric (metsuke: 50 g/m$^2$, thickness: 180 $\mu$m, air permeability: 14 cm$^3$/cm$^2$/sec) made of polypropylene fibers and prepared by a melt blow method, was treated in the same manner as in Example 4.

With respect to the obtained non-woven fabric, the infiltration speed of electrolyte, the liquid maintaining rate and the tensile break strength were measured, and the ESCA measurement and the XRF measurement were carried out. The results are shown in Table 2. As compared with Examples 4 and 6, the amounts of fluorine and oxygen introduced were small, and the infiltration speed of electrolyte was low.

As described in the foregoing, the battery separator of the present invention has high levels of hydrophilic nature, electrolyte absorption speed and safety during the operation, which have not been observed in the prior art, without losing the desired properties such as chemical resistance and solvent resistance specific to the non-woven fabric of polyolefin fibers. Thus, the industrial value of the present invention is significant.

Table 1

| | Binding energies | | Elemental compositional ratios | | Amount of attached fluorine (wt%) |
|---|---|---|---|---|---|
| | $F_{IS}$ (eV) | $F_{KLL}$ (eV) | ESCA O/F | XRF O/F | |
| Example 1 | 687 | 832 | 1.4 | 1.0 | 0.002 |
| Example 2 | 687 | 833 | 1.2 | 0.8 | 0.008 |
| Example 3 | 687 | 832 | 0.8 | 0.5 | 0.003 |
| Comparative Example 1 | 687 | 833 | 0.3 | 0.4 | 0.005 |
| Comparative Example 2 | 690 | 836 | 0 | 0 | 0 |
| | Liquid absorption height (mm) | | Alkali resistance (wt%) | | |
| Example 1 | 140 | | 0.25 | | |
| Example 2 | 80 | | 0.68 | | |
| Example 3 | 100 | | 0.70 | | |
| Comparative Example 1 | 40 | | 1.25 | | |
| Comparative Example 1 | 0 | | 0.02 | | |

Table 2

| | Liquid absorption height (mm/30 min) | Infiltration speed | Liquid maintaining rate (%) | Tensile break strength (kgf/2cm) | Alkali resistance (wt%) |
|---|---|---|---|---|---|
| Example 4 | 90 | 29 sec | 168 | 7.0 | 0.2 |
| Example 5 | 105 | 5 sec | 160 | – | 0.5 |
| Example 6 | 100 | 20 sec | 390 | 8.1 | 0.3 |
| Example 7 | 60 | 32 sec | 210 | 9.0 | 0.6 |
| Example 8 | 62 | 24 sec | 339 | 4.2 | 1.2 |
| Reference Example 1 | 0 | >60 min | 78 | 7.0 | 0.1 |
| Reference Example 2 | 5 | >60 min | 150 | 8.1 | 0.1 |
| Reference Example 3 | 0 | >60 min | 60 | 9.0 | 0.1 |
| Reference Example 4 | 0 | >60 min | 70 | 4.2 | 0.3 |
| Comparative Example 3 | 62 | 14 sec | 160 | – | 0.2 |
| Comparative Example 4 | 10 | 7 min | 249 | 1.9 | 1.5 |

Table 2 (continued)

| | Elemental compositional ratio by ESCA | | | Elemental compositional ratio by XRF | Binding energies | |
|---|---|---|---|---|---|---|
| | O/F | F/C | O/C | O/F | $F_{IS}$ (eV) | $F_{KLL}$ (eV) |
| Example 4 | 0.83 | 0.35 | 0.29 | 1.03 | 687 | 832 |
| Example 5 | 0.17 | 0.05 | 0.30 | 0.74 | 687 | 832 |
| Example 6 | 0.90 | 0.29 | 0.26 | 0.93 | 687 | 832 |
| Example 7 | 0.88 | 0.32 | 0.28 | 0.67 | 687 | 832 |
| Example 8 | 0.91 | 0.47 | 0.43 | 0.77 | 687 | 832 |
| Reference Example 1 | Not measurable | N.D. | N.D. | Not measurable | 687 | 833 |
| Reference Example 2 | Not measurable | N.D. | N.D. | Not measurable | 690 | 836 |
| Reference Example 3 | Not measurable | N.D. | N.D. | Not measurable | – | – |
| Reference Example 4 | Not measurable | N.D. | N.D. | Not measurable | 687 | 832 |
| Comparative Example 3 | Not measurable | N.D. | 0.30 | Not measurable | – | – |
| Comparative Example 4 | N.D. | 0.02 | 0.01 | N.D. | – | – |

**Claims**

1. A battery separator made of a non-woven fabric or film of a synthetic resin, characterized in that in its ESCA measurement, when the energy at peaks attributable to C-H and C-C bonds of $C_{IS}$ electron is 285 eV, the binding energy of $F_{IS}$ electron and the binding energy of $F_{KLL}$ Auger electron have the respective peak tops within ranges of from 686 to 688 eV and from 829 to 833 eV, respectively; the elemental compositional ratio of oxygen to fluorine (O/F) in the elemental composition as measured by ESCA is at least 0.5; and O/F as measured by a fluorescent X-ray analysis is at least 0.4.

2. The battery separator according to Claim 1, wherein the elemental compositional ratio of oxygen to carbon (O/C) as measured by ESCA is from 0.01 to 0.5; the elemental compositional ratio of fluorine to carbon (F/C) as measured by ESCA is from 0.01 to 0.5; and the elemental compositional ratio of oxygen to fluorine (O/F) as measured by a fluorescent X-ray analysis is from 0.4 to 10.

3. The battery separator according to Claim 1 or 2, wherein the non-woven fabric is a non-woven fabric containing fibers having a core-sheath structure wherein the core component is polypropylene, and the sheath component is polyethylene.

4. The battery separator according to Claim 3, wherein the fineness of the fibers having the core-sheath structure is from 0.2 to 6 denier; the thickness of the non-woven fabric is from 50 to 300 $\mu$m; the metsuke is from 20 to 120 $g/m^2$; the tensile break strength is from 3 to 20 kgf/2cm; and the air permeability is from 5 to 150 $cm^3/cm^2$/sec.

5. The battery separator according to Claim 3, wherein the fineness of the fibers having the core-sheath structure is from 0.5 to 4 denier; the thickness of the non-woven fabric is from 100 to 300 $\mu$m; the metsuke is from 30 to 100 $g/m^2$; the tensile break strength is from 4 to 20 kgf/2cm; and the air permeability is from 10 to 150 $cm^3/cm^2$/sec.

6. The battery separator according to Claim 3, 4 or 5, wherein the non-woven fabric is a non-woven fabric containing fibers having a core-sheath structure wherein the core component is polypropylene and the sheath component is polyethylene, and other polyolefin fibers.

7. The battery separator according to Claim 6, wherein said other polyolefin fibers are fibers made of a single component of a polyolefin.

8. The battery separator according to any one of Claims 1 to 7, wherein the weight reduction after dipping in a 30 wt% potassium hydroxide aqueous solution at 100°C for 1 hour, is at most 1.4 wt%.

9. The battery separator according to Claim 1, wherein the film of a synthetic resin is a porous polyolefin film.

10. The battery separator according to any one of Claims 1 to 9, wherein the amount of attached fluorine to be removed by dipping in water is at most 0.005 wt%.

11. A method for producing the battery separator as defined in any one of Claims 1 to 10, which comprises contacting a non-woven fabric or film of a synthetic resin to a gas mixture comprising fluorine and oxygen, for surface treatment.

12. The method for producing the battery separator as defined in any one of Claims 1 to 10, which comprises contacting a non-woven fabric or film of a synthetic resin to a gas mixture comprising fluorine and oxygen and then coating a nonionic surfactant thereon.

**European Patent Office**

# EUROPEAN SEARCH REPORT

Application Number

EP 96 10 7686

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 696 822 (JAPAN STORAGE BATTERY CO LTD) 14 February 1996 * page 3, line 13-19 * * page 4, line 14-27 * * claims 1-3 * | 1,2,10 | H01M2/16 |
| P,Y | | 3-9,11, 12 | |
| P,X | PATENT ABSTRACTS OF JAPAN vol. 95, no. 010 & JP-A-07 272710 (MITSUBISHI CHEM CORP), 20 October 1995, * abstract * | 1,2,9-11 | |
| P,Y | | 3-8,12 | |
| P,X | PATENT ABSTRACTS OF JAPAN vol. 95, no. 007 & JP-A-07 173765 (MITSUBISHI CHEM CORP), 11 July 1995, * abstract * | 1,2,10, 11 | |
| P,Y | | 3-9,12 | TECHNICAL FIELDS SEARCHED (Int.Cl.6) |
| X | PATENT ABSTRACTS OF JAPAN vol. 95, no. 002 & JP-A-07 053763 (MITSUBISHI KASEI CORP), 28 February 1995, * abstract * | 1,2,9,11 | H01M |
| Y | | 3-8,12 | |
| Y | GB-A-2 098 636 (FREUDENBERG CARL) 24 November 1982 * example 3 * * page 1, line 33 - page 2, line 34 * | 3-9,11, 12 | |

-/--

The present search report has been drawn up for all claims

| Place of search | Date of completion of the search | Examiner |
|---|---|---|
| MUNICH | 5 August 1996 | Engl, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 743 690 A1

| | European Patent Office | EUROPEAN SEARCH REPORT | Application Number<br>EP 96 10 7686 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN<br>vol. 009, no. 263 (E-351), 19 October 1985<br>& JP-A-60 109171 (SANYO DENKI KK), 14 June 1985,<br>* abstract * | 1-12 | |
| A | PATENT ABSTRACTS OF JAPAN<br>vol. 010, no. 168 (E-411), 14 June 1986<br>& JP-A-61 019056 (FUJI DENKI KAGAKU KK),<br>27 January 1986,<br>* abstract * | 1,2,10,<br>11 | |
| A | PATENT ABSTRACTS OF JAPAN<br>vol. 016, no. 312 (E-1230), 9 July 1992<br>& JP-A-04 087151 (SANYO ELECTRIC CO LTD),<br>19 March 1992,<br>* abstract * | 1-12 | |
| A | PATENT ABSTRACTS OF JAPAN<br>vol. 015, no. 040 (E-1028), 30 January 1991<br>& JP-A-02 276154 (SANYO ELECTRIC CO LTD),<br>13 November 1990,<br>* abstract * | 1-12 | TECHNICAL FIELDS SEARCHED (Int.Cl.6) |
| A | US-A-4 250 002 (COOK EDWARD H JR  ET AL)<br>10 February 1981<br>* column 5, line 17-41 *<br>* column 13, line 28-43 * | 12 | |

The present search report has been drawn up for all claims

| Place of search | Date of completion of the search | Examiner |
|---|---|---|
| MUNICH | 5 August 1996 | Engl, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document